# EUROPÄISCHE PATENTSCHRIFT

(11) **EP 1 900 272 B1**
(45) Veröffentlichungstag und Bekanntmachung des Hinweises auf die Patenterteilung: **28.12.2011**
(21) Anmeldenummer: 07110875.7
(22) Anmeldetag: 22.06.2007
(51) Int. Cl.: A01D 41/127

(54) **Landwirtschaftliche Arbeitsmaschine**
Agricltural working machine
Machine de travail agricole

(30) Priorität: 15.09.2006 DE 102006044159
(43) Veröffentlichungstag der Anmeldung: 19.03.2008
(73) Patentinhaber: CLAAS Selbstfahrende Erntemaschinen GmbH, 33428 Harsewinkel (DE)
(72) Erfinder: Holtmann, Bernd, 48324, Sendenhorst (DE); Brune, Markus, 33428, Marienfeld (DE); Neu, Sebastian, 49196, Bad Laer (DE)
(74) Vertreter: Schütte, Hartmut

(56) Entgegenhaltungen:
- EP-A- 0 702 891
- EP-A- 1 297 733
- EP-A1- 0 347 979
- US-A1- 2005 150 202

## Beschreibung

Die Erfindung betrifft eine landwirtschaftlichen Arbeitsmaschine, insbesondere Mähdrescher nach dem Oberbegriff des Anspruchs 1.

Aus dem Stand der Technik ist unter anderem die EP 1 297 733 A1 bekannt geworden, in der eine als Mähdrescher ausgeführte landwirtschaftliche Arbeitsmaschine offenbart ist, die in an sich bekannter Weise zur Bearbeitung eines durch ein als Getreideschneidwerk ausgeführtes Vorsatzgerät abgeernteten Erntegutstroms über so genannte Dreschorgane und diesen nachgeordnete Trenn- und Reinigungsorgane verfügt Zur Detektion verschiedener Erntegut- und Maschinenparameter sind dem Mähdrescher eine Vielzahl von Sensoren zugeordnet. Beispielhaft sei hier auf den im Zuführkanal angeordneten Schichthöhensensor zur Ermittlung des Gesamterntegutdurchsatzes und einen in einem Körnerelevator angeordneten Korndurchsatzsensor verwiesen. Zumindest diese beiden Sensoren generieren Erntegutparanietersignale, die in einer Auswerteinheit in einen Erntegutdurchsatz und einen Korndurchsatz umgerechnet werden. Verbreitet sind diesbezüglich auch so genannte Überkehrsensoren anzutreffen, die einen aus der Reinigung abgeschiedenen Überkehrerntegutstrom detektieren. Zudem verfügt der Mähdrescher über eine Vielzahl nicht näher beschriebener, an sich bekannter Sensoren zur Detektion von Maschinenparametern, wie etwa der Dreschtrommeldrehzahl, der Reinigungsgebläsedrehzahl und der Siebweiteneiristellung der Reinigungsetnrichturtg. Die mittels dieser Sensoren generierten Maschinenparametersignale werden ebenfalls in einer Auswerteinheit zu Maschinenparametern verrechnet.

Zugleich verfügt der Mähdrescher über eine Eingabe- und Anzeigeeinheit, die neben der Eingabe von Parametern auch das Editieren der von den Sensoren ermittelten Parameter ermöglicht und zugleich die Anzeige der ermittelten oder eingestellten Erntegutparameter und Maschinenparameter realisiert. Die offenbarte Anzeigeeinheit ist dabei so strukturiert, dass in diversen Anzeigefenstern die von den Sensoren generierten Erntegutparameter und/oder Maschinenparameter visualisiert werden. *Da hierbei die entsprechenden Werte (Daten) numerisch angezeigt werden, ist dies sehr unübersichtlich. Die numerisch angezeigten Daten können auch als historische Daten angesehen werden.* Charakteristisch ist hierbei, dass jeweils der gerade ermittelte Parameter im so genannten Onlinebetrieb angezeigt wird. Mithin gibt die Anzeige dem Betreiber der landwirtschaftlichen Arbeitsmaschine permanent einen Überblick über die gerade erreichte Arbeitsqualität und Auslastung der Maschine. Mit diesern Information wird der Betreiber in die Lage versetzt, beispielsweise durch Änderung der Fahrgeschwindigkeit oder durch Eingabe neuer Maschineneinstellungen, Einfluss auf die ermittelten Parameter mit dem Ziel zu nehmen, die Effizienz der Maschine zu optimieren. Dies erfordert jedoch von dem Betreiber der landwirtschaftlichen Arbeitsmaschine ein umfangreiches Wissen über die wechselseitigen Abhängigkeiten zwischen Erntegutparametern und Maschinenparametern. Regelmäßig wird es jedoch so sein, dass sich der Betreiber iterativ, nämlich durch Verstellen eines Parameters und Ablesen der eintretenden Veränderung an eine optimale Maschinenseinstellung annähert. Dies wird um so länger dauern, je unerfahrener der Maschinenbetreiber ist. Aufgrund dessen, dass die Anzeige als so genannte Momentananzeige ausgebildet ist, erhält der Betreiber der landwirtschaftlichen Arbeitsmaschine nur Informationen darüber, wie sich die vorgenommenen Veränderungen im Moment auf die verschiedenen Erntegut- und Maschinenparameter und damit die Arbeitsqualität der Maschine auswirken. Weder ein methodisches und damit schnelles Annähern an einen optimalen Arbeitszustand noch das Erkennen von sich ändernden Erntegutbedingungen und ihr in der Regel nicht sprunghaft zunehmender Einfluss auf eine Verschlechterung des Arbeitsergebnisses der landwirtschaftlichen Arbeitsmaschine wird mit einer derartig strukturierten Anzeige möglich.

Aus der US 2005/0150202 A1 geht ein Gerät hervor, bei der das Gerät in der Lage ist, die Leistungsfähigkeit der zugehörigen Erntemaschine für ein landwirtschaftliches Produkt anzuzeigen, wobei das Gerät über eine Anzahl von Sensoren verfügt, um die Betriebsbedingungen der Maschine zu erfassen. Es ist ferner eine Steuerung vorgesehen, die mit den Sensoren verbunden ist, um die Betriebsbedingungen auszuwerten und um dann Einstellwerte vorzugeben, mit denen die Maschine mit maximalem wirtschafflichen Erfolg arbeiten kann. Diese vorgegebenen Einstellwerte können vom Bediener der Maschine eingegeben werden oder es kann eine automatische Steuerung/*Regelung erfolgen, die auf diesen vorgegebenen Einstellwerten erfolgt.*

Aus der EP 0 702 891 A1 geht ein Verfahren zum Betrieb eines Mähdreschers hervor, der laufend zur Ernteleistungsoptimierung durch einen Steuerungsprozessor mit Soll- und Grenzbetriebsdaten von einem Bediener extern gesteuert sowie intern bei laufender Messung und Auswertung von Ist- Betriebsdaten, insbesondere Fahrdaten, geregelt betrieben wird, wobei laufend die absoluten und/oder relativen Ortskoordinaten des Mähdreschers erfasst und diesen zugeordnet die jeweiligen flächenspezifischen Ertragsmessdaten, insbesondere als ein Ertragsdatenkataster, zur Verwendung als historisches Datenkataster gespeichert werden, wobei der Steuerungsprozessor des Mähdreschers ein historisches Datenkataster im Zugriff hat und mit den jeweiligen Ortskoordinaten des Mähdreschers sowie mit dessen jeweiligen Fahrdaten verknüpft. Es können neue Soll- oder Grenzbetriebsdaten bestimmt und aktuell vorgegeben werden.

Es ist deshalb Aufgabe der Erfindung die beschriebenen Nachteile des Standes der Technik zu vermeiden und insbesondere eine Anzeigevorrichtung zu schaffen, die durch höhere Informationsdichte den Betreiber der landwirtschaftlichen Arbeitsmaschine in die Lage versetzt, schneller einen optimalen Betriebspunkt der landwirtschaftlichen Arbeitsmaschine zu erreichen.

Diese Aufgabe wird erfindungsgemäß durch die kennzeichnenden Merkmale des Anspruchs 1 gelöst.

Indem die der landwirtschaftlichen Arbeitsmaschine zugeordnete Anzeigeeinheit zumindest eine Auswahl der von Sensoren der landwirtschaftlichen Arbeitsmaschine generierten Erntegutstromsignale in einer historischen Darstellung visualisiert wird dem Betreiber der Arbeitsmaschine eine Anzeigeeinheit mit erhöhter Informationsdichte bereitgestellt, so dass er in die Lage versetzt wird, die landwirtschaftliche Arbeitsmaschine schneller an einen optimalen Betriebspunkt heranzuführen. Zudem wird dem Betreiber mit einer solchen Anzeigeeinheit die Möglichkeit geben, frühzeitig zu erkennen, wenn sich aufgrund der Änderung von Ernteguteigenschaften die Arbeitsqualität der landwirtschaftlichen Arbeitsmaschine verschlechtert, so dass er früher als dies bisher möglich war, durch Änderung von Maschinenparametern dieser Verschlechterung der Maschineneffizienz entgegenwirken kann.

*Es ist weiterhin vorteilhaft, dass die* Erfindung *berücksichtigt, dass* die historische Darstellung als Kennliniendarstellung ausgebildet und wobei die eine oder mehreren Kennlinien die Abhängigkeit von Erntegutparametern zueinander und/oder von Erntegutparametern und Maschinenparametern zueinander umfassen. Eine solche Visualisierung von Kennlinien *und der ihnen zugrunde gelegten Datenpunkte* hat vor allem den Vorteil, dass der Nutzer die erforderlichen Informationen aus einer übersichtlich strukturierten Anzeige abliest und er zugleich eine Beurteilung der Änderungen in einem historischen Kontext vornehmen kann.

Die erfindungsgemäße Anzeigeeinheit gibt dann die realen Bedingungen am zeitnahesten wieder, wenn in einer vorteilhaften Ausgestaltung die historische Darstellung der Kennlinien im Arbeitsbetrieb der landwirtschaftlichen Arbeitsmaschine online erfolgt.

Während des Ernteprozesses ändern sich Ernteguteigenschaften vor allem deshalb, da das Erntegut tageszeitbedingt erhebliche Schwankungen seiner Feuchte aufweist, wobei die Gutfeuchte morgens und abends aufgrund von Taubildung sehr hoch ist. Auch Schwankungen des Reifestadiums und einen hoher Unkrautbesatz können einen erheblichen negativen Einfluss auf den optimalen Betriebspunkt der landwirtschaftlichen Arbeitsmaschine haben. Um nun während eines Ernteeinsatzes diese Schwankungen erkennen zu können, ist in einer weiteren vorteilhaften Ausgestaltung vorgesehen, dass die historische Darstellung der Kennlinien im Arbeitsbetrieb der landwirtschaftlichen Arbeitsmaschine in einem definierten, frei wählbaren Zeitintervall erfolgt. Eine auf diese Weise ermittelte Kennlinie beschreibt die Effizienz der landwirtschaftlichen Arbeitsmaschine zu einem ganz bestimmten Zeitpunkt. Würde die historische Darstellung während des gesamten Arbeitsbetriebes vorgenommen, würden aufgrund der Vielzahl von Datenpunkten eine Änderung des Kennlinienverlaufes allmählich eintreten, so dass der Nutzer diese Änderungen nicht bewusst wahrnehmen und auf Effizienzverschlechterungen möglicherweise nicht frühzeitig reagieren würde.

Eine die Arbeitsqualität der landwirtschaftlichen Arbeitsmaschine sehr gut beschreibende historische Darstellung wird dann erreicht, wenn die aus den Erntegutstromsignalen abgeleiteten Erntegutparameter zumindest den Erntegutdurchsatz und den Kornverlust umfassen und die historische Darstellung die Abhängigkeit des Kornverlustes vom Erntegutdurchsatz visualisiert. Dies gilt auch, wenn nach einer weiteren vorteilhaften Ausgestaltung der Erfindung die aus den Erntegutstromsignalen abgeleiteten Erntegutparameter zumindest den Erntegutdurchsatz umfassen und die historische Darstellung die Abhängigkeit eines aus den Maschinenparametersignalen ermittelten Maschinenparameters vom Erntegutdurchsatz visualisiert.

Der Informationsgehalt der Anzeigeeinheit lässt sich auch dadurch weiter steigern, dass der Kornverlust aus der Summe der Kornverluste der Reinigungsorgane und der Kornverluste der Trennorgane oder separat aus dem Reinigungskornverlust und dem Hordenschüttlerkornverlust gebildet und visualisiert wird. Gleiches gilt, wenn die Anzeigeeinheit neben der Visualisierung des Erntegutgesamtdurchsatzes auch die Visualisierung des Korndurchsatzes umfasst.

In einer besonders bevorzugten Ausgestaltung der Erfindung wird als der zu visualisierende Maschinenparameter die Motorauslastung vorgeschlagen, da diese unmittelbar Aufschluss über die verfügbaren Leistungsreserven und damit verbunden die eventuelle Verschlechterung der Arbeitsqualität der landwirtschaftlichen Arbeitsmaschine gibt.

Da die eingestellten Maschinenparameter ebenfalls einen wesentlichen Einfluss auf die Effizienz der landwirtschaftlichen Arbeitsmaschine haben und in unmittelbarer Wechselwirkung zu den Erntegutparametern stehen, ist in einer vorteilhaften Weiterbildung der Erfindung vorgesehen, dass die Anzeige so ausgebildet ist, dass neben der historischen Darstellung der Kennlinien die diesen Kennlinien zugeordneten weiteren Maschinenparameter visualisiert werden, wobei die bevorzugten weiteren Maschinenparameter zumindest eine Auswahl der Maschinenparameter Dreschtrommeldrehzahl, Gebläsedrehzahl und Sieböffnungsweite umfasst. Indem diese zusätzlichen Informationen in der Anzeigeeinheit visualisiert werden, kann der Nutzer bei Änderung von Maschinenparametern und Erstellung an einer neuen Kennlinie schnell erkennen, welchen Einfluss die Änderung auf die Arbeitsqualität der landwirtschaftlichen Arbeitsmaschine hatte und gegebenenfalls sofort weitere Änderungen vornehmen, wenn die gewünschte Verbesserung der Arbeitsqualität nicht eingetreten ist.

### [Auslassung]

Damit der Vergleich zwischen früheren Betriebszuständen und nachfolgenden Betriebszuständen an Hand eines Kennlinienvergleichs möglich wird, ist in einer vorteilhaften Ausgestaltung der Erfindung vorgesehen, dass die Darstellung der visualisierten Kennlinien eingefroren werden kann und der eingefrorenen Kennlinie die beim Ermitteln dieser Kennlinie vorliegenden Maschinenparameter zugeordnet und in der Anzeigeeinheit visualisiert werden.

Da die Kennlinien aus einer Vielzahl von Datenpunkten ermittelt werden könnte der Fall eintreten, dass die Form der jeweiligen Kennlinie maßgeblich von den am häufigsten auftretenden Korn- oder Gesamtdurchsatzwerten bestimmt wird, sodass die Kennlinie außerhalb diese Bereiches nur ungenau die tatsächlichen Abhängigkeiten wiedergeben würde. Um dies zu vermeiden ist vorgesehen, dass die Kennlinie rechnerisch in Teilkennlinien, so genannte Cluster, unterteilt ist und innerhalb der Cluster eine Mittelwertbildung der generierten Datenpunkte erfolgt und wobei nach Überschreiten eines definierbaren Zeitintervalls historische Datenpunkte zumindest bei der Mittelwertbildung nicht mehr berücksichtigt werden.

Aufgrund dessen, dass die erntegutspezifischen Parameter in der landwirtschaftlichen Arbeitsmaschine an verschiedenen Stellen generiert werden und ein bestimmter Ausschnitt des Erntegutstromes zu verschiedenen Zeiten von den Sensoren detektiert werden ist weiterhin vorgesehen, dass die Laufzeitdifferenz der generierten Sensorsignale zueinander bei der Ermittlung der Datenpunkte berücksichtigt wird und wobei eine Routine vorgesehen ist, die bei der Ermittlung der Datenpunkte so genannte Ausreißer erkennt und diese aus der Auswerteinheit löscht.

Da es für den Betreiber der landwirtschaftlichen Arbeitsmaschine in der Regel darauf ankommt eine relative Kornverlustgrenze nicht zu überschreiten sieht eine Weiterbildung der Erfindung vor, dass mittels einer Eingabeeinrichtung eine relative Verlustgrenze definierbar ist, die in der Anzeigeeinheit visualisiert wird und bei deren Überschreitung ein visuelles und/oder akustisches Warnsignal generiert wird. Eine derartige Ausführung hat insbesondere den Vorteil, dass der Betreiber die Anzeigeeinheit nicht permanent beobachten muss, da er beim Erreichen kritischer Zustände automatisch darauf hingewiesen wird,

Sei Mähdreschern ist es beispielsweise bekannt, dass die Kornverluste im oberen Durchsatzbereich sprunghaft, nämlich einer Exponentialfunktion folgend, ansteigen, Damit der Betreiber des Mähdreschers bereits vor dem Erreichen dieser Durchsatzbereich Einfluss nehmen kann, beispielsweise durch Reduzierung der Fahrgeschwindigkeit, ist in einer weiteren Ausgestaltung der Erfindung vorgesehen, dass der historischen Darstellung der einen oder mehreren Kennlinien in der Anzeigeeinheit ein den momentanen Arbeitspunkt der landwirtschaftlichen Arbeitsmaschine repräsentierender Zeiger zugeordnet ist Auf diese Weise erkennt der Betreiber der landwirtschaftlichen Arbeitsmaschine rechtzeitig, wenn sich der Mähdrescher diesem kritischen Durchsatzbereich nähert, so dass ein abrupter Anstieg der Kornverluste gänzlich vermieden werden kann.

Beim Arbeiten in Beständen mit großen Durchsatzschwankungen bietet es sich bedingt durch den nur begrenzt verfügbaren Platz zur Anzeige von Kennlinien an, dass die in der Anzeigeeinheit visualisierte historische Darstellung der einen oder mehreren Kennlinien automatisch skalierbar ist, sodass die Anzeige auf einen bestimmten Wertebereich der verschiedenen Parameter begrenzbar ist.

In einer weiteren vorteilhaften Ausgestaltung der Erfindung wird vorgeschlagen, dass die erfindungsgemäße Anzeigeeinheit in einem Mähdrescher zur Datenvisualisierung im Arbeitsbetrieb und/oder in einem zwischen landwirtschaftlichen Arbeitsmaschinen austauschbarem Diagnosemodul verwendet wird, Dies hat den Vorteil, dass neben der unmittelbaren Unterstützung des Betreibers der landwirtschaftlichen Arbeitsmaschine zum Betreiben des Mähdreschers in einem optimalen Arbeitspunkt auch Maschinendiagnosen vorgenommen werden können, Dies ist vor allem dann von Interesse, wenn optimale Ausgangswerte für verschiedene Maschinenparameter einer Vielzahl von landwirtschaftlichen Arbeitsmaschinen ermittelt oder Ursachen für Funktionsstörungen herausgefunden werden sollen. In diesem Zusammenhang ist es auch von Vorteil, wenn die generierten Daten zwischen verschiednen landwirtschaftlichen Arbeitsmaschinen austauschbar sind.

Weitere vorteilhafte Ausgestaltungen sind Gegenstand weiterer Unteransprüche und werden nachfolgend an Hand in mehreren Figuren dargestellter Ausführungsbeispiele beschrieben, Es zeigen:
- Figur 1: einen Mähdrescher mit erfindungsgemäßer Anzeigeeinheit in Seitenansicht
- Figur 2: eine Detaildarstellung der erfindungsgemäßen Anzeigeeinheit
- Figur 3: eine weitere Detaildarstellung der erfindungsgemäßen Anzeigeeinheit

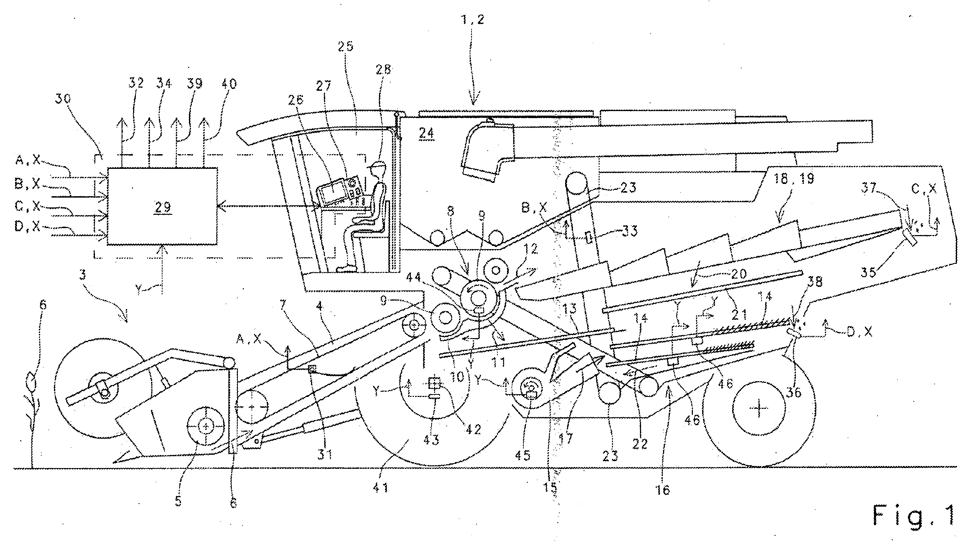

Die in Fig. 1 schematisch dargestellte, als Mähdrescher 2 ausgeführte landwirtschaftliche Arbeitsmaschine 1 nimmt in ihrem frontseitigen Bereich ein Getreideschneidwerk 3 auf, welches in an sich bekannter Weise mit dem Schrägförderer 4 des Mähdreschers 2 verbunden ist. Das Querförderorgan 5 des Getreideschneidwerkes 3 übergibt das Erntegut 6 an den Schrägförderer 4, wobei dieser das Erntegut 6 mittels eines umlaufenden Förderers 7 in seinem obenseitigen rückwärtigen Bereich an die Dreschorgane 8 des Mähdreschers 2 übergibt. In dem ein- oder mehrtrommelig ausgeführten Dreschorgan 8 wird das Erntegut 6 zwischen den Dreschtrommeln 9 und einem diese wenigstens teilweise ummantelnden Dreschkorb 10 hindurchgeführt und in zumindest zwei Teilströme 11, 12 getrennt. Der erste Teilstrom 11 besteht im Wesentlichen aus Körnern, Kurzstroh und Spreu und wird über einen Vorbereitungsboden 13 unmittelbar einem, aus verschiedenen Siebebenen 14 bestehenden Reinigungsorgan 16 zugeführt. Das Reinigungsorgan 16 nimmt zudem eine Gebläseeinheit 15 auf, die einen die Siebebenen 14 durchsetzenden Luftstrom 17 generiert.

Der im rückwärtigen Bereich der Dreschorgane 8 aus diesem austretende weitere, im Wesentlichen aus Stroh und einem Restkornanteil bestehende Teilstrom 12 wird auf ein als Hordenschüttler 18 ausgeführtes Trennorgan 19 geleitet. Auf dem Hordenschüttler 18 wird ein großer Anteil der noch in dem Teilstrom 12 enthaltenen Körner 20 abgeschieden und über einen so genannten Rücklaufboden 21 und den Vorbereitungsboden 13 an das Reinigungsorgan 16 übergeben. Es liegt im Rahmen der Erfindung, dass das Trennorgan 18 auch als nicht dargestellter Rotationsabscheider ausgebildet sein kann.

In dem Reinigungsorgan 16 wird schließlich aus den in sie eingeleiteten verschiedenen Gutströmen 11, 20 ein gereinigter Körnerstrom 22 mittels Förderelevatoren 23 in einen Korntank 24 gefördert und dort zwischengespeichert. Die Entleerung des Korntanks 24 erfolgt in der Regel mittels eines nicht dargestellten Korntankentleerförderers.

Weiter ist dem Mähdrescher 2 in der Fahrerkabine 25 die noch näher zu beschreibende erfindungsgemäße Anzeigeeinheit 26 sowie eine Eingabeeinrichtung 27 zugeordnet. Zumindest über die Eingabeeinrichtung 27 kann der Betreiber 28 der landwirtschaftlichen Arbeitsmaschine, 1 in an sich bekannter Weise Daten eingeben oder von der Anzeigeeinheit 26 visualisierte Daten ändern. Die Anzeigeeinheit 26 sowie die Eingabeeinheit 27 sind zwecks Datenaustausch drahtlos oder leitungsbasiert mit einer Auswerteinheit 29 verbunden, die entweder ebenfalls in der Fahrerkabine 25 oder an beliebiger Stelle in der landwirtschaftlichen Arbeitsmaschine 1 angeordnet ist. Es liegt im Rahmen der Erfindung, dass die Eingabeeinrichtung 27, die Anzeigeeinheit 26 und die Auswerteinheit 29 auch unmittelbar in eine gemeinsame Datenverarbeitungseinrichtung 30 integriert sein können, die dann entweder fest dem Mähdrescher 2 zugeordnet ist oder austauschbar in verschiedenen landwirtschaftlichen Arbeitsmaschinen 1 eingesetzt werden kann,

Im dargestellten Ausführungsbeispiel ist dem Schrägförderer 4 ein an sich bekannter Schichthöhensensor 31 zugeordnet, der in Abhängigkeit von der Menge des zugeführten Erntegutes 6 die Auslenkung des umlaufenden Förderers 7 detektiert und schließlich ein Schichthöhensignal A generiert. Das Schichthöhensignal A bildet somit eines der Erntegutstromsigriale X und wird an die Auswerteinheit 29 übergeben, wobei in der Auswerteinheit 29 in an sich bekannter und deshalb nicht näher beschriebener Weise der Erntegutparameter Erntegutdurchsatz 32 generiert wird. Weiter ist dem Körnerelevator 23 ein so genannter Kornsensor 33 zugeordnet, der in an sich bekannter Weise den von dem Körnerelevator 23 geförderten Körnerstrom 22 sensiert. Dabei generiert der Kornsensor 33 ein Kornmengensignal B, welches ebenfalls eines der Erntegutstromsignale X bildet und an die Auswerteinheit 29 übermittelt wird. In der Auswerteinheit 29 wird aus dem Kornmengensignal B in ebenfalls aus dem Stand der Technik bekannter Weise der Erntegutparameter Kornduchsatz 34 ermittelt. Im rückwärtigen Bereich der Trenn- und Reinigungsorgane 18, 16 sind diesen so genannte, in der Regel als Körperschallsensoren ausgebildete Kornverlustsensoren 35, 36 zugeordnet, die jeweils den aus dem Mähdrescher 2 herausgeförderten Kornverluststrom 37, 38 als Hordenschüttlerkornverlustsignal C und als Reinigungskornverlustsignal D detektieren, Mithin bilden die Signale C und D ebenfalls jeweils eines der Erntegutstromsignale X, die der Auswerteinheit 29 zugeführt werden. In der Auswerteinheit 29 werden aus den Hordenschüttlerkornverlustsignalen C und den Reinigungskornverlustsignalen D der Kornverlust 39 in an sich bekannter und deshalb nicht näher beschriebener Weise ermittelt, Dabei kann der ermittelte Kornverlust 39 entweder den Gesamtkornverlust D + C oder jeweils den Reinigungskornverlust D und den Hordenschüttlerkornverlust C separat umfassen.

Zur Ermittlung von Maschinenparametern 40 verfügt der in Fig. 1 dargestellte Mähdrescher 2 an einem Laufrad 41 der Vorderachse 42 über einen Drehzahlsensor 43 zur Ermittlung der Drehzahl dieses Laufrades 41, im Bereich der Dreschorgane 8 über einen Drehzahlsensor 44 zur Ermittlung der Drehzahl der Dreschtrommel 9, im Bereich der Reinigungsorgane 16 Über einen Drehzahlsensor 45 zur Ermittlung der Drehzahl der Gebläseeinheit 15 sowie im Bereich der Siebebenen 14 über Sensoren 46 zur Ermittlung der jeweiligen Sieböffnungsweiten. Da alle diese Sensoren aus dem Stand der Technik hinlänglich bekannt sind, wird auf deren detaillierte Beschreibung hier verzichtet. Es liegt auch im Rahmen der Erfindung, dass nur ein Teil oder gar ein einziger dieser Sensoren vorhanden ist, Jeder dieser Sensoren 43 - 46 generiert maschinenspezifische, die kinematischen Betriebsparameter des Mähdreschers 2 repräsentierende Maschinenparametersignale Y, die an die Auswerteinheit 29 übergeben werden und in dieser zu den bereits erwähnten Maschinenparametern 40 in an sich bekannter Weise verrechnet werden,

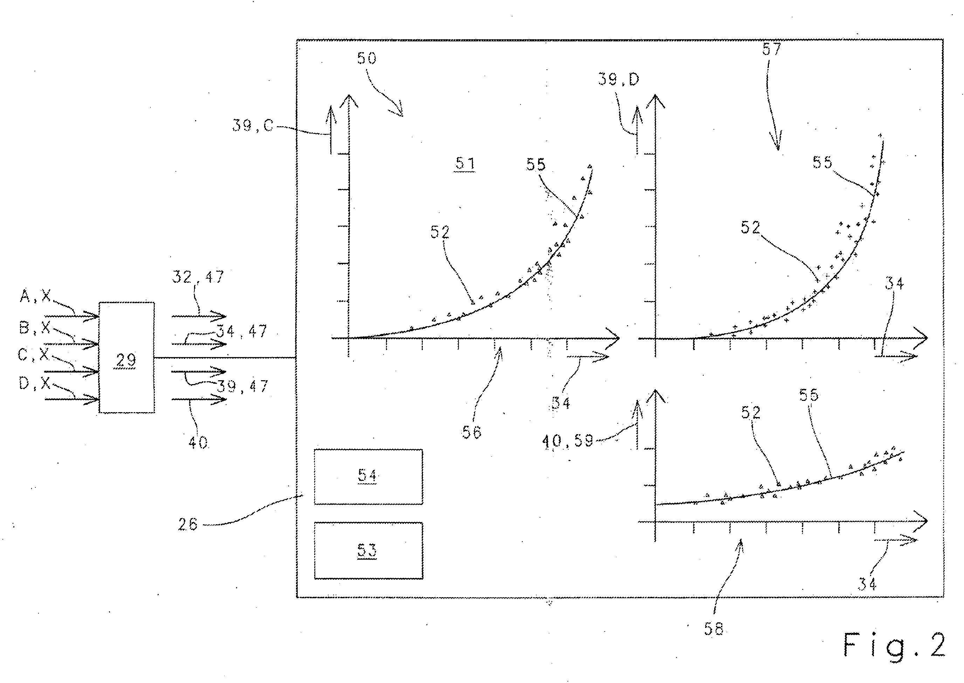

In Fig. 2 ist die erfindungsgemäße Anzeigeeinrichtung 26 nun im Detail dargestellt Wie bereits beschrieben generiert die Auswerteinheit 29 die Erntegutparameter 47, wie etwa den Erntegutdurchsatz 32, den Korndurchsatz 34, den Kornverlust 39 und verschiedenen Maschinenparameter 40. Diese werden leitungsbasiert oder drahtlos in noch näher zu beschreibender Struktur an die Anzeigeeinheit 26 übergeben. Die Anzeigeeinheit 26 umfasst zumindest ein erstes Anzeigefeld 50, welches ein Koordinatensystem 51 umfasst, in welchem der Kernverlust 39 der Trennorgane 19 basierend auf den Hordenschüttlerkornverlustsignalen C in Abhängigkeit vom Korndurchsatz 34 darstellbar ist. Indem nun der Mähdrescher 2 einen Erntegutbestand 6 aberntet, generieren der dem Trennorgan 19 zugeordnete Kornverlustsensor 35 das Hordenschüttlerkornverlustsignal C und der Kornsensor 33 das Kornmengensignal B. In der Auswerteinheit 29 wird aus jeweils zusammengehörigen Erntegutstromsignalen X ein Datenpunkt 52 generiert und in dem Anzeigefeld 51 visualisiert. Aufgrund dessen, dass die besagten Erntegutstromsignale X in verschiedenen Bereichen des Mähdreschers 2 generiert werden, muss bei der Ermittlung des Datenpunktes 52 berücksichtigt werden, dass die auf ein und denselben Gutstromausschnitt bezogenen Erntegutstromsignale X zeitlich versetzt generiert werden. Im einfachsten Fall wird dieser Umstand dadurch berücksichtigt, dass ein Laufzeitdifferenzwert 53 in der Auswerteinheit 29 hinterlegt ist, der entweder editierbar oder fest vorgegeben ist und je nach Position der Sensoren 33, 35 zwischen 5 und 15 Sekunden variieren kann. Aufgrund dessen, dass die Generierung der Datenpunkte 52 im Onlinebetrieb erfolgt, werden eine Vielzahl von Datenpunkten 52 in dem besagten Anzeigefeld 50 der Anzeigeeinheit 26 visualisiert, Die Auswerteinheit 29 umfasst zudem ein Programmmodul 54 in weichem die an sich bekannten mathematischen Zusammenhänge zwischen Korndurchsatz 34 und Kornverlust 39, in der Regel Exponentialfunktionen, hinterlegt sind, sodass durch mathematische Regression den ermittelten Datenpunkten 52 eine Kennlinie 55 zugeordnet werden kann. Aufgrund dessen, dass die Aufzeichnung der Datenpunkte 52 im Onlinebetrieb des Mähdreschers 2 und entweder dauerhaft oder über einen bestimmten Zeitraum erfolgt, wird eine historische Darstellung 56 der Erntegutstromsignale X und damit der Erntegutparameter 47 erreicht, Auf diese Weise wird dem Betreiber 28 der landwirtschaftlichen Arbeitsmaschine 1 eine Anzeigeeinheit 26 zur Verfügung gestellt, über die er online Effizienzänderungen des Mähdreschers 2 in einem historischen Kontext schnell erkennen und darauf reagieren kann, sodass er den Mähdreschers 2 effektiv in einem optimalen Betriebspunkt halten oder wieder an diesen heranführen kann.

In analoger Weise zu dem vorher Beschriebenen kann in dem Anzeigefeld 50 oder einem weiteren Anzeigefeld 57 der Kornverlust 39 basierend auf dem Reinigungskornverlustsignal D in Abhängigkeit vom Korndurchsatz 34 dargestellt sein, sodass die Anzeigeeinheit 26 sowohl den Kornverlust 39 der Reinigungsorgane 16 als auch den Kornverlust 39 der Trennorgane 18 unabhängig voneinander in einem historischen Kontext visualisieren kann. Es liegt im Rahmen der Erfindung, dass die historische Darstellung auch auf einen Gesamtkornverlust C + D beschränkbar ist. Die Datenpunkte 52 und die jeweils zugehörige Kennlinie 55 werden ebenfalls in Analogie zu den vorherigen Ausführungen bestimmt und deshalb aus Vereinfachungsgründen nicht nochmals beschrieben.

In einem weiteren Anzeigefeld 58 oder an Stelle der zuvor beschriebenen Anzeigefelder 50, 57 kann ein Maschinenparameter 40 in Abhängigkeit von einem Erntegutparameter 47 dargestellt sein. Beispielhaft ist diese Darstellung an Hand des Maschinenparameters Motorauslastung 59 beschrieben, Die Motorauslastung 59 kann in an sich bekannter und deshalb nicht näher beschriebner Weise unmittelbar von der Motorsteuerung abgegriffen werden Die Ermittlung des Korndurchsatzes 34 erfolgt in der oben beschriebenen Weise, Indem wieder einer bestimmten Motorauslastung 59 der zugehörige Korndurchsatz 34 zugeordnet wird, generiert die Auswerteinheit 29 wieder Datenpunkte 52 die in dem entsprechenden Anzeigefeld 58 der Anzeigeeinheit 26 visualisiert werden, Auch hier kann durch Regression eine Kennlinie 55 generiert und angezeigt werden, Sowohl die Punkt- als auch die Kennliniendarstellung erfolgt dann wieder in einem historischen Kontext mit den bereits beschriebenen Vorteilen gegenüber bekannten Anzeigen, Aufgrund dessen, dass bei der Darstellung der Abhängigkeit zwischen einem Maschinenparameter 40 und einem Erntegutparameter 47 der Erntegutstrom nur an einer Stelle detektiert wird, ergibt sich kein zu berücksichtigender zeitlicher Versatz zwischen den generierten Signalen, sodass ein solcher hier unberücksichtigt bleiben kann.

Für jeden der vorbeschriebenen Fälle kann die jeweilige Kennlinie 55 entweder permanent währende des Arbeitsbetriebs der landwirtschaftlichen Arbeitsmaschine 1 oder nur in einem definierten Zeitintervall aufgezeichnet werden, was letztlich bedeutet, dass die historische Darstellung 56 jeweils nur gemäß dem definierten Zeitintervall auf einen bestimmten Zeitraum beschränkt ist. Weiter liegt es im Rahmen der Erfindung, dass an Stelle des Korndurchsatzes 34 die jeweiligen Erntegutparameter 47 oder Maschinenparameter 40 in Abhängigkeit von dem Erntegutdurchsatz 32 in der historischen Darstellung 56 visualisiert werden, wobei der Erntegutdurchsatz 32, wie beschrieben, mittels des Schichthöhensensors 31 in an sich bekannter Weise ermittelt wird.

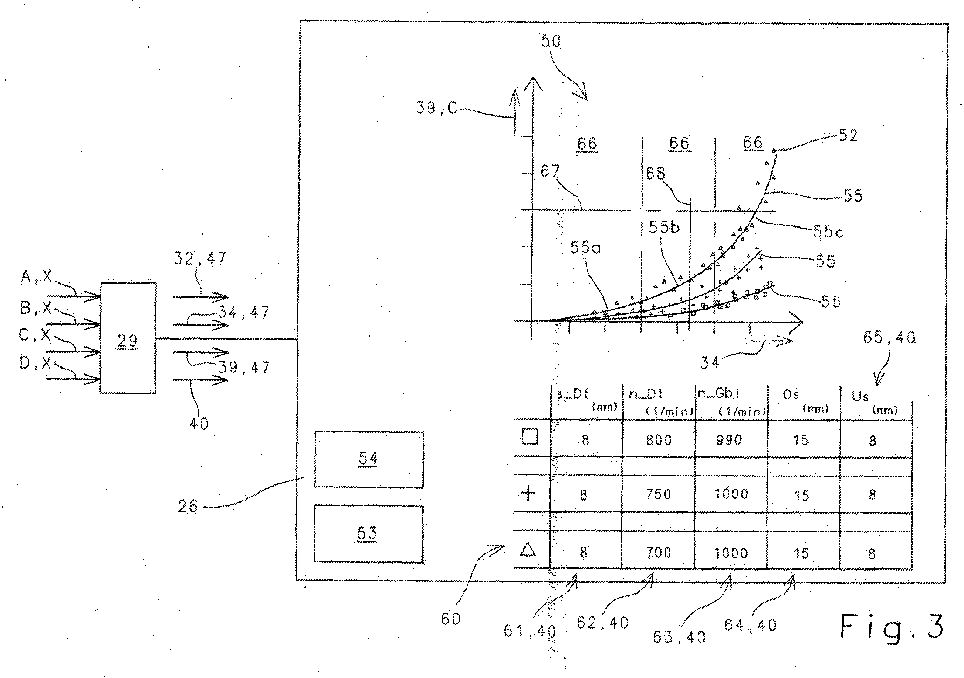

Gemäß Fig. 3 kann die Anzeigeeinheit 26 auch so beschaffen sein, dass in einem Anzeigefeld 50 eine Vielzahl von Kennlinien 55 dargestellt sind. Diese unterscheiden sich voneinander dadurch, dass sie jeweils bei unterschiedlichen Betriebsparametern 40 der landwirtschaftlichen Arbeitsmaschine 1 aufgenommen wurden. In einem derartig strukturierten Anzeigefeld 50 sind die jeweils bereits ermittelten Kennlinien 55 eingefroren, sodass sich deren Gestalt nicht mehr ändert. Damit die einzelnen Kennlinien 55 voneinander unterschieden werden können, werden in einem weiteren Anzeigefeld 60 der Anzeigeeinheit 26 die den jeweiligen Kennlinien 55 zugeordneten Maschinenparameter 40 angezeigt Im dargestellten Ausführungsbeispiel sind dies jeweils die zwischen den Dreschorganen 8 und dem Dreschkorb 10 eingestellte Dreschspaltweite 61, die Drehzahl 62 der Dreschtrommel 9, die Drehzahl 63 der Gebläseeinheit 15 des Reinigungsorgans 16 und die jeweiligen Siebweiten 64, 65 der Siebebenen 14 des Reinigungsorgans 16. Es liegt im Rahmen der Erfindung, dass hier auch nur eine Auswahl der beschriebenen Maschinenparameter 40 angezeigt wird oder weitere, nicht explizit genannte, Maschinenparameter 40 visualisiert werden können. Nach der Erfindung sind die Kennlinien 55 in Teilkennlinien 55a - c in der Weise unterteilt , dass der Wertebereich des auf der X-Achse des Koordinatensystems 51 aufgetragenen Erntegutparameters 47 in so genannte Cluster 66 unterteilt ist. Die Darstellung der in der Auswerteinheit 29 durch mathematische Zusammenhänge definierten Cluster 66 ist in Figur 3 schematisch durch die eingezeichneten strich-punktierten Linien angedeutet. Die in der Auswerteinheit 29 hinterlegten mathematischen Zusammenhänge fassen die innerhalb der Cluster 66 liegenden Datenpunkte 52 mittels der Methode der gleitenden Mittelwertbildung zusammen. Damit eine gerade im Onlinebetrieb erstellte Kennlinie 55 die realen Bedingungen optimal wiedergibt, ist zudem vorgesehen, dass die Anzahl der Datenpunkte 52 je Cluster 66 beschränkt ist und beim Generieren darüber hinaus gehender Datenpunkte 52 der jeweils älteste Datenpunkt 52 gelöscht wird. Es liegt im Rahmen der Erfindung, dass der gleiche Effekt auch dadurch erzielt wird, dass nur die innerhalb eines definierten Zeitintervalls generierten Datenpunkte 52, z.B. die letzten 5 Minuten, berücksichtigt werden und weiter zurück liegende Datenpunkte 52 gelöscht werden, sodass diese bei der Ermittlung der jeweiligen Kennlinie 55 keine Berücksichtigung mehr finden. Zudem kann vorgesehen sein, dass diese Datenpunkte 52 zugleich aus dem visualisierten Koordinatensystem 51 gelöscht werden. In an sich bekannter Weise kann bei der Ermittlung der Datenpunkte 52 in der Auswerteinheit 29 eine Routine implementiert sein, die so genannte Ausreißer, dies sind Datenpunkte 52, die nicht in der definierten Genauigkeit mit der ermittelten Kennlinie 55 korrelieren, gelöscht werden. Zudem kann über die zuvor beschriebene Eingabeeinrichtung 27 eine relative Verlustgrenze 67 vordefiniert werden, bei deren Überschreitung der Betreiber 28 der landwirtschaftlichen Arbeitsmaschine 1 durch ein akustisches oder visuelles Warnsignal informiert wird, dass der Mähdrescher 2 nunmehr in einem nicht optimalen Betriebspunkt arbeitet.

Insbesondere bei großen Durchsatzschwankungen und kleinen Anzeigefeldern 50 kann die Darstellung der Kennlinie 55 über dem gesamten Durchsatzbereich mitunter schwer lesbar sein, deshalb ist nach einer Ausgestaltung der Erfindung vorgesehen, dass das dargestellte Koordinatensystem 51 skalierbar ist, wobei die Skalierung entweder selbsttätig erfolgt oder vom Betreiber 28 der landwirtschaftlichen Arbeitsmaschine 1 vorgenommen werden kann. Zudem kann zur besseren Orientierung vorgesehen sein, dass der Kennlinie 55 ein so genannter Zeiger 68, im dargestellten Ausführungsbeispiel ein vertikaler Balken, zugeordnet ist, der den momentanen Betriebspunkt des Mähdreschers 2 beschreibt.

Neben dem Einsatz der erfindungsgemäßen Anzeigeeinheit 26 im Onlinebetrieb während des Ernteprozesses des Mähdreschers 2 kann auch vorgesehen sein, dass die Anzeigeeinheit 26, die Eingabeeinrichtung 27 und die Auswerteinheit 29, wie beschrieben, in einer Datenverarbeftungsefnnchtung 30 zusammengefasst sind und als so genanntes Diagnosemodul 30 verwendet werden, Eine solche Ausgestaltung hat insbesondere den Vorteil, dass entsprechend geschultes Servicepersonal durch Aufzeichnung der beschriebenen Kennlinien 55 mit einem solchen Diagnosemodul 30 schneller technische Störungen beheben und optimierte Maschinenparameter 40 ermitteln kann. Zudem kann das Diagnosemodul 30 so beschaffen sein, dass die ermittelten Kennlinien 55 und die abgeleiteten optimierten Maschinenparameter 40 zwischen verschiedenen landwirtschaftlichen Arbeitsmaschinen 1 austauschbar sind. Zugleich kann es sinnvoll sein, die Kennlinien 55 des vorherigen Erntejahres zur Beurteilung der Kennlinien 55 der laufenden Ernte heranzuziehen,

Es liegt im Rahmen des Könnens eines Fachmanns die beschriebene Struktur der Anzeigeeinheit 26 in nicht dargestellter Weise abzuwandeln oder in anderen als den dargestellten Anwendungsfällen einzusetzen, um die beschriebenen Effekte zu erzielen, ohne dabei den Rahmen der Erfindung zu verlassen.

### Bezugszeichenliste:

- 1: landwirtschaftliche Arbeitsmaschine
- 2: Mähdrescher
- 3: Getreideschneidwerk
- 4: Schrägförderer
- 5: Querförderorgan
- 6: Erntegut
- 7: umlaufender Förderer
- 8: Dreschorgan
- 9: Dreschtrommel
- 10: Dreschkorb
- 11: Teilstrom
- 12: Teilstrom
- 13: Vorbereitungsboden
- 14: Siebebene
- 15: Gebläseeinheit
- 16: Reinigungsorgan
- 17: Luftstrom
- 18: Hordenschüttler
- 19: Trennorgan
- 20: Körnerstrom
- 21: Rucklaufboden
- 22: Körnerstrom
- 23: Förderelevator
- 24: Korntank
- 25: Fahrerkabine
- 26: Anzeigeeinheit
- 27: Eingabeeinrichtung
- 28: Betreiber
- 29: Auswerteinheit
- 30: Datenverarbeitungseinrichtung/Diagnosemodul
- 31: Schichthöhensensor
- 32: Erntegutdurchsatz
- 33: Kornsensor
- 34: Kornduchsatz
- 35: Kornverlustsensor
- 36: Kornverlustsensor
- 37: Kornverluststrom
- 38: Kornverluststrom
- 39: Kornverlust
- 40: Maschinenparameter
- 41: Laufrad
- 42: Vorderachse
- 43: Drehzahlsensor
- 44: Drehzahlsensor
- 45: Drehzahlsensor
- 46: Sensor
- 47: Erntegutparameter
- 48:
- 49:
- 50: Anzeigefeld
- 51: Koordinatensystem
- 52: Datenpunkt
- 53: Laufzeitdifferenzwert
- 54: Programmmodul
- 55: Kennlinie
- 56: historische Darstellung
- 57: Anzeigefeld
- 58: Anzeigefeld
- 59: Motorauslastung
- 60: Anzeigefeld
- 61: Dreschspaltweite
- 62: Dreschtrommeldrehzahl
- 63: Reinigungsgebtäsedrehzahl
- 64: Siebweite
- 65: Siebweite
- 66: Cluster
- 67: relative Verlustgrenze
- 68: Zeiger

- A: Schichthöhensignal
- B: Kornmengenstgrtat
- C: Hordenschüttlerkomverlustsignal
- D: Reinigungskornverlustsignal
- X: Erntegutstromsignal
- Y: Maschmenparametersignale

## Patentansprüche

1. Landwirtschaftliche Arbeitsmaschine mit einer Anzeigeeinheit, insbesondere Mähdrescher, mit mehreren Sensoren zur Detektion von Erntegutstromsignalen (A-D, X) von Erntegutströmen und zur Detektion von Maschinenparametersignalen (Y) und mit einer Auswerteeinheit (29), wobei die Auswerteinheit (29) aus den Erntegutstromsignalen (X) und den Maschinenparametersignalen (Y) Erntegutparameter (47) und Maschinenparameter (40) ableitet und in Wirkverbindung mit der Anzeigeeinheit steht,
**dadurch gekennzeichnet,**
**dass** die Laufzeitdifferenz der detektierten Erntegutstromsignale (X, A-D) bei der Ermittlung von Datenpunkten (52) berücksichtigt wird und die Anzeigeeinheit (26) zumindest eine Auswahl der generierten Erntegutstromsignale (X) in einer historischen Darstellung (56), die als Kennliniendarstellung (55) ausgebildet ist, visualisiert und dass die eine oder mehrere Kennlinien (55) in Teilkennlinien (55a-c), so genannte Cluster (66), unterteilt sind und innerhalb der Cluster (66) eine Mittelwertbildung der generierten Datenpunkte (52) erfolgt und wobei nach Überschreiten einer definierbaren Anzahl von Datenpunkten (52) und/oder eines Zeitintervalls historische Datenpunkte (52) zumindest bei der Mittelwertbildung nicht mehr berücksichtigt werden.

2. Landwirtschaftliche Arbeitsmaschine nach Anspruch 1,
**dadurch gekennzeichnet,**
**dass** die eine oder mehreren Kennlinien (55) und die ihnen zugrunde gelegten und dargestellten Datenpunkte (52) die Abhängigkeit von Erntegutparametern (47) zueinander und/oder von Erntegutparametern (47) und Maschinenparametern (40) zueinander umfassen.

3. Landwirtschaftliche Arbeitsmaschine nach einem der vorhergehenden Ansprüche,
**dadurch gekennzeichnet,**
**dass** die historische Darstellung (56) der Kennlinien (55) und die ihnen zugrunde gelegten und dargestellten Datenpunkte (52) im Arbeitsbetrieb der landwirtschaftlichen Arbeitsmaschine (1, 2) online erfolgt.

4. Landwirtschaftliche Arbeitsmaschine nach einem der vorhergehenden Ansprüche,
**dadurch gekennzeichnet,**
**dass** die historische Darstellung (56) der Kennlinien (55) und die ihnen zugrunde gelegten und dargestellten Datenpunkte (52) im Arbeitsbetrieb der landwirtschaftlichen Arbeitsmaschine (1, 2) in einem definierten Zeitintervall erfolgt.

5. Landwirtschaftliche Arbeitsmaschine nach einem der vorhergehenden Ansprüche,
**dadurch gekennzeichnet,**
**dass** die aus den Erntegutstromsignalen (X) abgeleiteten Erntegutparameter (47) zumindest den Erntegutdurchsatz (32, 34) und den Kornverlust (39) umfassen und die historische Darstellung (56) die Visualisierung des Kornverlustes (39) in Abhängigkeit vom Erntegutdurchsatz (32, 34) umfasst.

6. Landwirtschaftliche Arbeitsmaschine nach einem der Ansprüche 1 bis 4,
**dadurch gekennzeichnet,**
**dass** die aus den Erntegutstromsignalen (X) abgeleiteten Erntegutparameter (47) zumindest den Erntegutdurchsatz (32, 34) umfassen und die historische Darstellung (56) die Visualisierung eines aus den Maschinenparametersignalen (Y) ermittelten Maschinenparameters (40) in Abhängigkeit vom Erntegutdurchsatz (32, 34) umfasst.

7. Landwirtschaftliche Arbeitsmaschine nach Anspruch 5,
**dadurch gekennzeichnet,**
**dass** der Mähdrescher (2) in an sich bekannter Weise zumindest Dreschorgane (8), Trennorgane (19) und Reinigungsorgane (16) umfasst und der Kornverlust (39) aus der Summe der Kornverluste (39, D) der Reinigungsorgane (16) und der Kornverluste (39, C) der Trennorgane (19) oder separat aus dem Kornverlust (39, D) der Reinigungsorgane (16) und dem Kornverlust (39, C) der Trennorgane (19) gebildet und visualisiert wird.

8. Landwirtschaftliche Arbeitsmaschine nach einem der Ansprüche 5 und 6,
**dadurch gekennzeichnet,**
**dass** der Erntegutdurchsatz den Erntegutgesamtdurchsatz (32) oder den Korndurchsatz (34) umfasst.

9. Landwirtschaftliche Arbeitsmaschine nach Anspruch 6,
**dadurch gekennzeichnet,**
**dass** der Maschinenparameter (40) zumindest den Maschinenparameter Motorauslastung (59) umfasst.

10. Landwirtschaftliche Arbeitsmaschine nach einem der vorhergehenden Ansprüche,
**dadurch gekennzeichnet,**
**dass** die Anzeige so ausgebildet, dass neben der historischen Darstellung (56) der Kennlinien (55) die diesen Kennlinien (55) zugeordneten weiteren Maschinenparameter (40) visualisiert werden.

11. Landwirtschaftliche Arbeitsmaschine nach Anspruch 10,
**dadurch gekennzeichnet,**
**dass** die weiteren Maschinenparameter (40) zumindest eine Auswahl der Maschinenparameter Dreschtrommeldrehzahl (62), Gebläsedrehzahl (63), Fahrgeschwindigkeit, Siebweite (64, 65) und Dreschspaltweite (61) sein können.

12. Landwirtschaftliche Arbeitsmaschine nach einem der vorhergehenden Ansprüche,
**dadurch gekennzeichnet,**
**dass** die von den Sensoren (43 - 46) ermittelten Maschinenparametersignale (Y) und die Erntegutstromsignale (X) in der historischen Darstellung (56) der Anzeigeeinheit (26) als Punktdarstellungen (52) visualisiert werden und die Kennlinien (55) durch Regressionsanalyse in einer Auswerteinheit (29) ermittelt werden.

13. Landwirtschaftliche Arbeitsmaschine nach einem der vorhergehenden Ansprüche,
**dadurch gekennzeichnet,**
**dass** die Darstellung der visualisierten Kennlinien (55) eingefroren werden kann und der eingefrorenen Kennlinie (55) die beim Ermitteln dieser Kennlinie (55) vorliegenden Maschinenparameter (40) zugeordnet und visualisiert werden.

14. Landwirtschaftliche Arbeitsmaschine nach einem der vorhergehenden Ansprüche,
**dadurch gekennzeichnet,**
**dass** die Kennlinie (55) im Onlinebetrieb in Abhängigkeit von den generierten Datenpunkten (52) permanent aktualisiert wird.

15. Landwirtschaftliche Arbeitsmaschine nach einem der vorhergehenden Ansprüche,
**dadurch gekennzeichnet,**
**dass** eine Routine vorgesehen ist, die bei der Ermittlung der Datenpunkte (52) so genannte Ausreißer erkennt und diese aus der Auswerteinheit (29) löscht.

16. Landwirtschaftliche Arbeitsmaschine nach einem der vorhergehenden Ansprüche,
**dadurch gekennzeichnet,**
**dass** mittels einer Eingabeeinrichtung (27) eine relative Verlustgrenze (67) definierbar ist, die in der Anzeigeeinheit (26) visualisiert wird und bei deren Überschreitung ein visuelles und/oder akustisches Warnsignal generiert wird.

17. Landwirtschaftliche Arbeitsmaschine nach einem der vorhergehenden Ansprüche,
**dadurch gekennzeichnet,**
**dass** die in der Anzeigeeinheit (26) visualisierte historische Darstellung (56) der einen oder mehreren Kennlinien (55) automatisch skalierbar ist.

18. Landwirtschaftliche Arbeitsmaschine nach einem der vorhergehenden Ansprüche,
**dadurch gekennzeichnet,**
**dass** der historischen Darstellung (56) der einen oder mehreren Kennlinien (55) in der Anzeigeeinheit (28) ein den momentanen Arbeitspunkt der landwirtschaftlichen Arbeitsmaschine (1, 2) repräsentierender Zelger (68) zugeordnet ist.

## Claims

1. Agricultural machine with a display unit, in particular a combine harvester, having multiple sensors for detecting crop flow signals (A-D, X) from crop flows and for detecting machine parameter signals (Y) and having an evaluation unit (29), the evaluation unit (29) deriving crop parameters (47) and machine parameters (40) from the crop flow signals (X) and the machine parameter signals (Y) and being in functional connection with the display unit,
**characterized in that** the runtime difference of the detected crop flow signals (X, A-D) is taken into account in determining data points (52) and the display unit (26) visualizes at least a selection of the generated crop flow signals (X) in a history imaging (56) configured as a characteristics graph (55), and that the one or multiple characteristic curve(s) (55) is/are subdivided into sub-curves (55a-c), so-called clusters (66), and that averaging of the generated data points (52) is performed within the clusters (66) and wherein as a definable number of data points (52) and/or a time interval is exceeded, historical data points (52) cease to be taken into account at least for averaging.

2. The agricultural machine according to claim 1, **characterized in that** the one or more characteristic curves (55) and the illustrated data points (52) on which these are based comprise the interdependence between crop parameters (47) and/or between crop parameters (47) and machine parameters (40).

3. The agricultural machine according to any of the preceding claims, **characterized in that** the history imaging (56) of the characteristic curves (55) and the illustrated data points (52) on which these are based, is performed online during operation of the agricultural machine (1, 2).

4. The agricultural machine according to any of the preceding claims, **characterized in that** the history imaging (56) of the characteristic curves (55) and the illustrated data points (52) on which these are based, is performed in a defined time interval during operation of the agricultural machine (1, 2).

5. The agricultural machine according to any of the preceding claims, **characterized in that** the crop parameters (47) derived from the crop flow signals (X) comprise at least the crop throughput (32, 34) and the grain loss (39) and that the history imaging (56) comprise the visualization of the grain loss (39) in dependence on the crop throughput (32, 34).

6. The agricultural machine according to any of the claims 1 to 4, **characterized in that** the crop parameters (47) derived from the crop flow signals (X) comprise at least the crop throughput (32, 34) and that the history imaging (56) comprises a visualization of the machine parameters (40) determined from the machine parameter signals (Y) in dependence on the crop throughput (32, 34).

7. The agricultural machine according to claim 5, **characterized in that** the combine harvester (2) comprises as is known per se, at least threshing elements (8), separating elements (19), and cleaning elements (16) and the grain loss (39) is formed and visualized from the total of the grain loss (39, D) of the cleaning elements (16) and the grain loss (39, C) of the separating elements (19), or separately from the grain loss (39, D) of the cleaning elements (16) and the grain loss (39, C) of the separating elements (19).

8. The agricultural machine according to any of claims 5 and 6, **characterized in that** the crop throughput comprises the total crop throughput (32) or the grain throughput (34).

9. The agricultural machine according to claim 6, **characterized in that** the machine parameter (40) comprises at least the machine parameter of motor utilization (59).

10. The agricultural machine according to any of the preceding claims, **characterized in that** the display is configured such that other than the history imaging (56) of the characteristic curves (55) the further machine parameters (40) attributed to these characteristic curves (55) are visualized.

11. The agricultural machine according to claim 10, **characterized in that** the further machine parameters (40) may include at least a selection of the machine parameters of threshing drum speed (62), blower speed (63), driving speed, screen aperture (64, 65) and threshing gap width (61).

12. The agricultural machine according to any of the preceding claims, **characterized in that** the machine parameter signals (Y) determined by the sensors (43 - 46) and the crop flow signals (X) are visualized in the history imaging (56) of the display unit (26) as dot diagrams (52) and the characteristic curves (55) are determined by regression analysis in an evaluation unit (29).

13. The agricultural machine according to any of the preceding claims, **characterized in that** the imaging of the visualized characteristic curves (55) may be frozen and the machine parameters (40) present in determining this characteristic curve (55) are assigned to the frozen characteristic curve (55) and visualized.

14. The agricultural machine according to any of the preceding claims, **characterized in that** the characteristic curve (55) is continuously being updated in online operation in dependence on the generated data points (52).

15. The agricultural machine according to any of the preceding claims, **characterized in that** a routine is provided to recognize so-called outliers when determining the data points (52) and to delete these from the evaluation unit (29).

16. The agricultural machine according to any of the preceding claims, **characterized in that** by means of an input device (27) a relative loss limit (67) can be defined which is visualized in the display unit (26) and if it is exceeded, a visual and/or acoustic warning signal is generated.

17. The agricultural machine according to any of the preceding claims, **characterized in that** the history imaging (56) of the one or multiple characteristic curves (55) visualized in the display unit (26) is automatically scalable.

18. The agricultural machine according to any of the preceding claims, **characterized in that** the history imaging (56) of the one or multiple characteristic curves (55) in the display unit (28) has assigned to it an indicator (68) representing the momentary operating point of the agricultural machine (1, 2).

## Revendications

1. Machine agricole munie d'une unité d'affichage, plus particulièrement une moissonneuse-batteuse, de plusieurs capteurs sensoriels pour détecter des signaux de flux de récolte (A-D, X) et pour détecter des signaux de paramètres machine (Y), et d'une unité d'évaluation (29), cette unité d'évaluation (29) dérivant des signaux de flux de récolte (X) et des signaux de paramètres machine (Y) les paramètres de récolte (47) et les paramètres machine (40), et fonctionnant en liaison avec l'unité d'affichage,
**caractérisée en ce**
**que** le délai de propagation des signaux de flux de récolte (X, A-D) détectés est pris en compte dans la détermination de points donnés (52) et que l'unité d'affichage (26) visualise au moins une sélection des signaux de flux de récolte (X) générés, sur une représentation historique (56) sous forme d'une représentation de caractéristiques, et que l'une ou plusieurs caractéristiques (55) sont divisées en caractéristiques partielles (55a-c), appelées groupes (66), et que se constitue au sein de ces groupes une valeur moyenne des points donnés générés (52), des points donnés historiques (52) n'étant plus pris en compte, tout au moins dans la constitution de la moyenne, lorsqu'est dépassé un nombre définissable de points donnés (52) et/ou un intervalle de temps.

2. Machine agricole selon la revendication 1,
**caractérisée en ce**
**que** l'une ou plusieurs caractéristiques (55) et les points donnés (52) sur lesquels elles se basent et qui sont représentés comprennent la corrélation des paramètres de récolte (47) entre eux et/ou celle des paramètres de récolte (47) avec les paramètres de machine (40).

3. Machine agricole selon l'une quelconque des revendications précédentes,
**caractérisée en ce**
**que** la représentation historique (56) des caractéristiques (55) et des points donnés (52) sur lesquels elles se basent et qui sont représentés s'effectue en ligne lorsque la machine agricole (1, 2) est en marche.

4. Machine agricole selon l'une quelconque des revendications précédentes,
**caractérisée en ce**
**que** la représentation historique (56) des caractéristiques (55) et des points donnés (52) sur lesquels elles se basent et qui sont représentés s'effectue dans un intervalle de temps défini lorsque la machine agricole (1, 2) est en marche.

5. Machine agricole selon l'une quelconque des revendications précédentes,
**caractérisée en ce**
**que** les paramètres de récolte (47) dérivés des signaux de flux de récolte (X) comprennent au moins le débit de récolte (32, 34) et la perte de grains (39), et que la représentation historique (56) comprend la visualisation de la perte de grains (39) en fonction du débit de récolte (32, 34).

6. Machine agricole selon l'une quelconque des revendications précédentes 1 à 4,
**caractérisée en ce**
**que** les paramètres de récolte (47) dérivés des signaux de flux de récolte (X) comprennent au moins le débit de récolte (32, 34) et que la représentation historique (56) comprend la visualisation d'un paramètre machine (40) déterminé sur la base des signaux de paramètres machine (Y) en fonction du débit de récolte (32, 34).

7. Machine agricole selon la revendication 5,
**caractérisée en ce**
**que** la moissonneuse-batteuse (2) comprend, ce qui est en soi connu, au moins des organes de battage (8), des organes de séparation (19) et des organes de nettoyage (16), et que la perte de grains (39) est visualisée et représente la somme des pertes de grains (39, D) des organes de nettoyage (16) et des pertes de grains (39, C) des organes de séparation (19) ou que cette perte de grains (39) résulte soit de la perte de grains (39, D) des organes de nettoyage (16), soit de la perte de grains (39, C) des organes de séparation (19).

8. Machine agricole selon l'une quelconque des revendications précédentes 5 et 6,
**caractérisée en ce**
**que** le débit de récolte comprend le débit total de récolte (32) ou le débit de grains (34).

9. Machine agricole selon la revendication 6,
**caractérisée en ce**
**que** le paramètre machine (40) comprend au moins le paramètre machine « exploitation du moteur » (59).

10. Machine agricole selon l'une quelconque des revendications précédentes,
**caractérisée en ce**
**que** l'affichage est conçu de telle sorte que les autres paramètres machine (40) affectés aux caractéristiques (55) sont visualisés à côté de la représentation historique (56) de ces caractéristiques (55).

11. Machine agricole selon la revendication 10,
**caractérisée en ce**
**que** les autres paramètres machine (40) peuvent au moins être choisis parmi les paramètres machine suivants : vitesse de rotation du tambour de battage (62), vitesse de rotation de la soufflante (63), vitesse de marche, largeur de trémie (64, 65) et largeur de fente de battage (61).

12. Machine agricole selon l'une quelconque des revendications précédentes,
**caractérisée en ce**
**que** les signaux de paramètre machine (Y) obtenus par les capteurs (43 - 46) ainsi que les signaux de flux de récolte (X) sont visualisés dans la représentation historique (56) de l'unité d'affichage (26) sous forme de représentations paramétriques (52) et que les caractéristiques (55) sont déterminées par analyse de régression dans une unité d'évaluation (29).

13. Machine agricole selon l'une quelconque des revendications précédentes,
**caractérisée en ce**
**que** la représentation des caractéristiques visualisées (55) peut être stoppée et que les paramètres machine (40) existant lors de la détermination des caractéristiques (55) sont visualisés et affectés à la caractéristique (55) sur laquelle aura été stoppée la représentation.

14. Machine agricole selon l'une quelconque des revendications précédentes,
**caractérisée en ce**
**que** la caractéristique (55) dans le mode en ligne est en permanence actualisée en fonction des points donnés générés (52).

15. Machine agricole selon l'une quelconque des revendications précédentes,
**caractérisée en ce**
**qu'**est prévue une routine qui identifie, lors de la détermination des points donnés (52), les points dits aberrants pour les effacer de l'unité d'évaluation (29).

16. Machine agricole selon l'une quelconque des revendications précédentes,
**caractérisée en ce**
**que** peut être définie une limite de perte relative (67) au moyen d'un dispositif d'entrée de données (27), cette limite étant visualisée dans l'unité d'affichage (26) et dont le dépassement génère un signal d'alarme visuel et/ou acoustique.

17. Machine agricole selon l'une quelconque des revendications précédentes,
**caractérisée en ce**
**que** la représentation historique (56) d'une ou de plusieurs caractéristiques (55), visualisée sur l'unité d'affichage (26), peut être échelonnée automatiquement.

18. Machine agricole selon l'une quelconque des revendications précédentes,
**caractérisée en ce**
**qu'**est affecté à la représentation historique (56) d'une ou de plusieurs caractéristiques (55) sur l'unité d'affichage (26) un pointeur (68) représentant le point de fonctionnement instantané de la machine agricole (1, 2).
